# EUROPEAN PATENT APPLICATION

(11) **EP 1 260 747 A1**
(43) Date of publication of application: **27.11.2002**
(21) Application number: 01908232.0
(22) Date of filing: 02.03.2001
(51) Int. Cl.: F16L 11/08, F16L 11/11, F16L 33/24, B32B 1/08, B32B 27/30, B32B 27/34

(54) **RESIN HOSE FOR FUEL**

(30) Priority: 03.03.2000 JP 2000058662; 29.09.2000 JP 2000299167
(71) Applicant: Toyoda Gosei Co., Ltd., Nishikasugai-gun, Aichi 452-8564 (JP)
(72) Inventor: KOIKE, Masaki c/o Toyoda Gosei Co., Ltd., Nishikasugai-gun, Aichi 452-8564 (JP); MITSUI, Kenichi c/o Toyoda Gosei Co., Ltd., Nishikasugai-gun, Aichi 452-8564 (JP); BITO, Shinichi c/o Toyoda Gosei Co., Ltd., Nishikasugai-gun, Aichi 452-8564 (JP); TSUTSUMI, Daisuke c/o Toyoda Gosei Co., Ltd., Nishikasugai-gun, Aichi 452-8564 (JP); KONDO, Mitsutaka c/o Toyoda Gosei Co., Ltd., Nishikasugai-gun, Aichi 452-8564 (JP)
(74) Representative: Leson, Thomas Johannes Alois, Dipl.-Ing.
(86) International application number: JP0101603
(87) International publication number: WO01065161

(57) **Abstract**

A resin hose for fuel in a plural-layer structure comprising a main body layer (14) made of aliphatic polyamide, and an inner tube layer (16) made of fluoroplastic disposed on the inner side of the main body layer (14). One or both of the aliphatic polyamide (aliphatic PA) and the fluoroplastic are respectively a modified aliphatic PA and a modified fluoroplastic. The characteristics of the both satisfy the requirements of a difference of melting point (DSC method) of 60°C or less, and a difference of modulus of flexural elasticity (ASTM D 790) of 1500 MPa or less. Accordingly, the main body layer (14) and the inner tube layer (16) can be directly adhered to each other by co-extrusion.

## Description

### FIELD OF THE INVENTION

The present invention relates to a resin hose for fuel. More particularly, it relates to a resin hose for fuel of a plural-layer structure excellent in gasoline impermeability and superior also in productivity.

### BACKGROUND ART

The resin hose for fuel is generally required to have complex properties including fuel resistance, gasohol resistance (resistance to gasoline containing alcohol), fuel impermeability, and moisture impermeability. Recently, in particular, regulations about fuel permeation is becoming stricter from the viewpoint of environmental protection in several nations including the United States. It is said that, in future, the fuel permeation quantity per vehicle need to be controlled under 1/4 of the present quantity. Accordingly, in resin hoses for fuel of a single layer formed of polyamide such as nylon 11 or nylon 12 excellent in fuel oil resistance and superior in relative flexibility, it is predicted hard to satisfy the requirement of fuel impermeability.

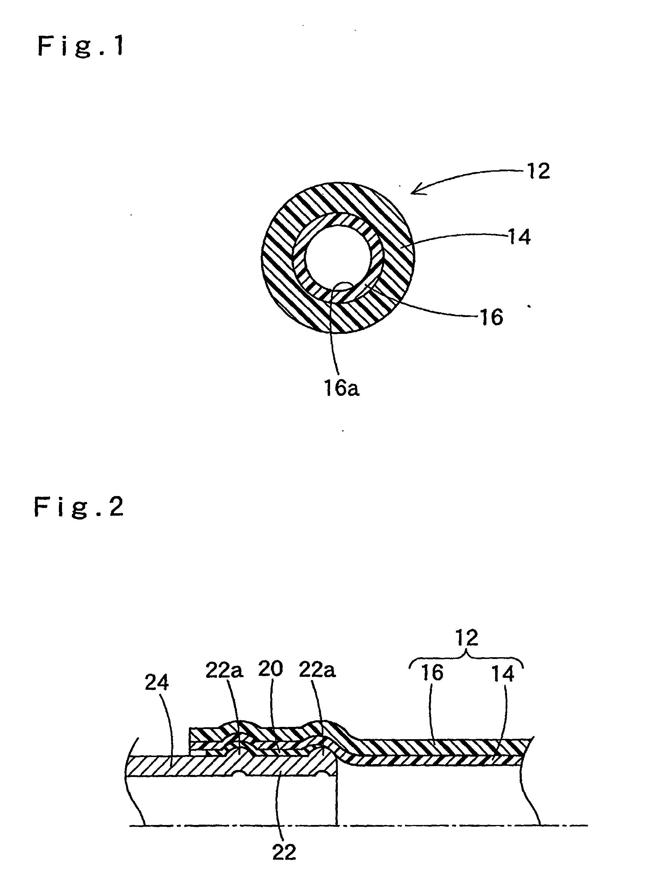

Accordingly, as shown in Fig. 1, various resin hoses for fuel 12 of plural-layer structure comprising a main body layer 14 made of an aliphatic polyamide, and an inner tube layer 16 made of fluoroplastic disposed inside of the main body layer 14 are being proposed (1. Japanese Laid-open Patent No. 8-104807, 2. Japanese Laid-open Patent No. 8-300524, 3. Japanese Laid-open Patent No. 10-311461, 4. Japanese Patent No. 2812802, etc.).

However, the technologies proposed in these publications had their own problems, that is, the blending composition of the polyamide forming materials of the inner tube layer is complicated (1), improving process of adhesion is required after extruding the inner tube layer (2), and an adhesive layer is required between the main body layer and inner tube layer (4), etc.

Usually, the inner peripheral wall in which the fuel in the resin hose for fuel flows is required to be conductive in order to discharge (destaticize) the static electricity.

In the technology (3) for extruding the main body layer and inner tube layer together, an extra conductive treatment was needed in order to provide the inner tube layer 16 with conductivity. That is, when the inner tube layer 16 was formed of a conductive material, it was regarded difficult to assure a sufficient adhesion.

In the light of such background, it is hence an object of the present invention to present a resin hose for fuel excellent in fuel impermeability and superior in productivity.

It is other object of the present invention to present a resin hose for fuel not requiring extra conductive treatment for inner tube layer.

In a fuel resin hose (hose main body) 12 having an inner tube layer 16 made of fluoroplastic, as shown in Fig. 2, when a metal junction 22 coated with fluororubber 20 is force-fitted, it was found hard to maintain a sufficient sealing performance for a long period. In particular, such tendency was significant in the configuration having hemispherical stopping bumps 22a, 22a at one or two positions as shown in the illustrated example, instead of the factory type of leading end metal junction (nipple) 22 of metal pipe 24.

It is a further object of the present invention to present a connection structure and method of resin hose of plural layers capable of maintaining the sealing performance of the metal junction for a long period, in a resin hose of plural layers having an inner tube layer made of fluoroplastic.

### SUMMARY OF THE INVENTION

The inventors hit upon an idea of resin hose for fuel of the following configuration in the process of strenuous efforts in development for solving these problems.

In a resin hose for fuel in a plural-layer structure comprising a main body layer made of aliphatic polyamide, and an inner tube layer made of fluoroplastic disposed at the inner side of the main body layer, when one or both of the aliphatic polyamide (aliphatic PA) and fluoroplastic are respectively modified aliphatic PA and modified fluoroplastic, and the characteristics of the both satisfy the requirements of difference of melting point (DSC method) of 60°C or less, and difference of modulus of flexural elasticity (ASTM D 790) of 1500 MPa or less or 500 MPa or less, the main body layer and inner tube layer are directly adhered to each other by co-extrusion.

In this composition, preferably, the modified fluoroplastic is modified by incorporating a functional group capable of reactive-bonding or associating with a functional group of the aliphatic PA including modified or unmodified, so that the chemical adhesion between the main body layer and inner tube layer may be assured easily. As the modified fluoroplastic, fluoroplastics modified by maleic acid and/or epoxy, or incorporated with a carbonate group and/or a halide carboxylate group are preferably used.

As the modified aliphatic PA, the modified aliphatic PA is modified by incorporating a functional group capable of reactive-bonding or associating with a functional group of the fluoroplastic including modified or unmodified, so that it is expected to improve the chemical adhesion further. As the modified aliphatic group, the material increased in the content of amino group (including imino group) is used preferably.

The modified aliphatic PA is made of modified nylon 11 and/or modified nylon 12, or mainly made thereof, and the modified fluoroplastic is made of modified ethylene-tetrafluoroethylene copolymer (modified ETFE) or mainly made thereof, so that the characteristic requirements of both layers can be satisfied easily, and the fuel permeability can be suppressed at the same time.

The inner tube layer usually contains conductive filler as modified fluoroplastic resin, and a conductive path is formed continuously in the longitudinal direction in the inner peripheral wall of the inner tube layer, and the inner peripheral wall side of each inner tube layer has a conductivity of surface resistivity (ASTM D 991) of 10¹⁰ ohms or less, so that the electric charge by flow of fuel can be discharged favorably.

In this composition, when the modulus of flexural elasticity of the conductive path is set closer to the value of the modulus of flexural elasticity of the inner tube layer, rather than the modulus of flexural elasticity of the main body layer, it is effective to lessen the stress applied to the interface of the inner tube layer and conductive path, when bending or force-fitting the fuel hose.

When manufacturing the resin hose for fuel of the present invention by co-extrusion of main body layer and inner tube layer, the extrusion speed is preferred to be 5 m/min or more. By increasing the extrusion speed, it is expected to increase the adhesion strength between the main body layer and inner tube layer. That is, the residence time in the extrusion head is shortened, and it is estimated that the decrease rate of the bonding function group amount is suppressed.

The connection structure of the resin hose of plural layers of the present invention is to solve the above problems by the following configuration.

A connection structure of resin hose of plural layers for connecting by force-fitting a metal junction having coat film of fluororubber, to a resin hose of plural layers having an inner tube layer made of fluoroplastic,
being characterized in that the inner tube layer is formed of a modified fluoroplastic modified by incorporating a polar group.

The fluoroplastic for forming the inner tube layer is a modified fluoroplastic by incorporating a polar group, and it is expected to increase the adhesion of the inner tube against the fluororubber coat film on the metal junction surface. That is, in the prior art, the adhesion and sealing performance of the fluororubber coat film and PA (nylon 11, 12, etc.) could be assured somewhat, and its reasons are estimated as follows.

The fluororubber polymer (FKM) itself has a higher SP value (dissolution parameter: square root of cohesive energy density) as compared with the fluoroplastic.

The portion for forming the coat film is not made of FKM alone, but contains various subsidiary materials of high SP value (polar materials), and the SP value of the coat film is expected to be higher than that of the FKM itself. For example, vulcanizers (polyamine, polyol, organic peroxide, etc.), vulcanization aids (phosphonium salt, etc.), and metal oxides (MgO, CaO, etc.) are all polar materials of high SP value, and further the carbon black contains chemical active groups such as quinone group and hydroquinone group on the surface. Generally, the chemical formation property is established in the SP value.

Incidentally, SP values of fluororubber (FKM), fluoroplastic (PTFE), and polyamide (nylon 8) are FKM: 9.3, PTFE: 6.2, and nylon 8: 12.7, according to publications. The first value is cited from "Basic synthetic rubber lecture, New series" ed. by Kimura, (Taiseisha, July 25, 1988, Appendix), and the latter two values are cited from "Adhesion Handbook, second edition" ed. by Japan Adhesion Society (November 10, 1980, p. 110) respectively.

Fluoroplastics represented by PTFE are small in SP values by nature as quoted above, but when modified by incorporating polar groups to form modified fluoroplastics, the SP value of the inner tube layer becomes similar to that of the fluororubber coat film, and hence it is estimated that the adhesion between the inner tube layer and fluororubber coat film is increased.

In this composition, the inner tube layer is preferred to be formed of a modified fluoroplastic by incorporating a functional group containing carbonyl groups such as a carbonate group and/or halide carboxylate group (a halogenated carboxylic acid group). By incorporation of an active hydrogen, not only the SP value is increased, but also the reaction adhesion with the fluororubber coat film (chemical bonding) is expected.

Besides, the fluororubber coat film is preferable to be formed of fluororubber blend of polyol vulcanization system or amine vulcanization system. Chemicals used in these vulcanization systems have active hydrogen, and are expected to have a stronger reaction adhesion (chemical bond) with the modified fluoroplastic for forming the inner tube layer.

The connection structure of the present invention has an effect of securely blocking permeation of fuel through the metal junction when applied in the fuel resin hose using aliphatic PA as the material for the main body layer adjacent to the outside of the inner tube layer.

Basically, the connection structure of the resin hose of plural layers having the above configuration is formed by the following connection method.

A connection method of resin hose of plural layers for connecting by force-fitting a metal junction having coat film of fluororubber, to a resin hose of plural layers having an inner tube layer made of fluoroplastic,
being characterized in that the inner tube layer is formed of a modified fluoroplastic modified by incorporating a polar group, and that the fluororubber is coated by force-fitting in a semi-vulcanized state.

By inserting (force-fitting) the metal junction into the resin hose with the rubber coat film in a semi-vulcanized state, vulcanization gradually progresses with the lapse of time, drop of tightening force due to thermal deterioration of resin hose can be compensated, and drop of adhesion and sealing performance can be prevented.

In this configuration, (1) the inner tube layer is formed of modified fluoroplastic incorporating a functional group containing carbonyl groups, such as a carbonate group and/or a halide carboxylate group, and/or (2) the coat film is formed of a fluororubber blend of polyol vulcanization system or amine vulcanization system, and therefore along with force-fitting of the metal junction with the fluororubber coat film in semi-vulcanized state, the reaction bonding (vulcanization adhesion) of the inner tube layer and rubber coat film becomes stronger.

### BRIEF DESCRIPTION OF THE DRAWINGS

Fig. 1 is a cross sectional view showing an example of resin hose for fuel according to the present invention.
Fig. 2 is a longitudinal sectional view showing a connection structure of resin hose for fuel in double structure.
Fig. 3 is a perspective view of resin hose for fuel showing other embodiment of the present invention.
Fig. 4 is a perspective view of resin hose for fuel showing a different embodiment of the present invention.
Fig. 5 is a partially enlarged sectional view showing a case of forming bellows in the resin hose for fuel of the present invention.
Fig. 6 is a graph showing the relation of amino end groups amount and adhesion force of fluoroplastic in nylon 12.
Fig. 7 is a graph showing the relation of extrusion speed and adhesion strength (adhesion force) between the main body layer and inner tube layer in the case of manufacture of resin hose for fuel of the present invention by co-extrusion.

### BEST MODE FOR CARRYING OUT THE INVENTION

### A. The resin hose for fuel of the present invention is explained below by referring to illustrated examples.

A resin hose for fuel 12 of the present invention basically has a structure of plural layers comprising a main body layer 14 made of aliphatic polyamide, and an inner tuber layer 16 made of fluoroplastic disposed at the inside of the main body layer 14.

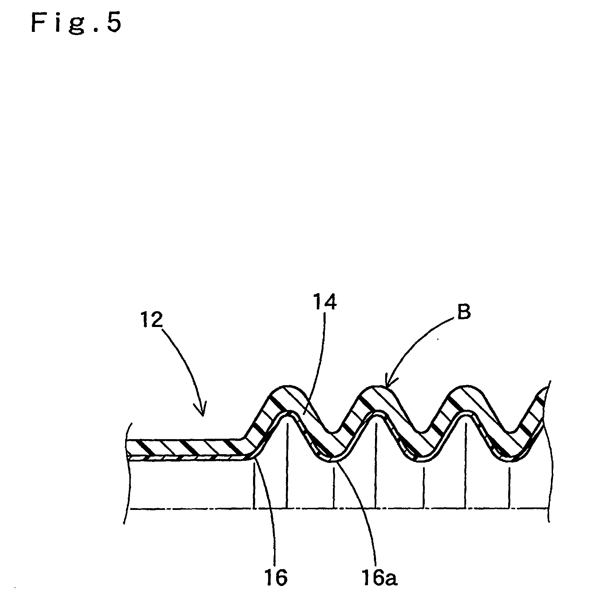

The illustrated example is a two-layer structure of a main body layer 14 and the inner tuber layer 16, but it may be also composed of three to six layers comprising a protector layer and other functional layers at the outside of the resin hose for fuel 12. The resin hose for fuel 12 can be enhanced in flexibility by forming bellows B by blow molding after co-extrusion as shown in Fig. 5.

Herein, the fuel includes gasoline, alcohol-added gasoline (gasohol), light oil, LPG and other fuels for vehicles.

The resin hose for fuel 12 of the present invention is suited to impermeability of fuel such as gasoline and alcohol-added gasoline as shown in embodiments below.

The reason of using aliphatic PA as the main body layer 14 is that the aliphatic PA is a resin for general purpose, and is excellent in resistance to fuel and gasohol.

As the aliphatic PA, lactam polymer, diamine-dicarboxylic acid condensate, amino acid polymer, and their copolymers and blends may be used. Specific examples include nylon 6, nylon 66, nylon 610, nylon 612, nylon 11, and nylon 12. Among them, it is particularly preferred to use nylon 11 and/or nylon 12 as main ingredient. Nylon 11 and/or nylon 12 are excellent in flexibility (the modulus of flexural elasticity is below half) as compared with each nylon 6 or nylon 66 for general purpose, and are also low in fuel permeability (about 1/4 or less in permeability), and these characteristics are particularly required in the resin hose for fuel.

The modulus of flexural elasticity of nylon is nylon 6: 2.8 x 10³ MPa, nylon 66: 2.8 x 10³ MPa, nylon 11: 1.2 x 10³ MPa, and nylon 12: 1.1 x 10³ MPa, and the moisture absorption (saturated humidity) is nylon 6: 9.5 wt.%, nylon 66: 8.5 wt.%. nylon 11: 1.9 wt.%, and nylon 12: 1.5 wt.% (See T. Mita (ed.): "Maruzen Polymer Dictionary", September 20, 1994, Maruzen, Table 1, p. 987).

On the other hand, a fluoroplastic is used in the inner tube layer 16 because it is far excellent in various characteristics such as fuel resistance and fuel impermeability as compared with the aliphatic PA.

Examples of fluoroplastics include polytetrafluoroethylene (PTFE), polyvinylidene fluoride (PVDF), polychlorotrifluoroethylene (CTFE), ethylene-tetrafluoroethylene copolymer (ETFE), ethylene-polychlorotrifluoroethylene copolymer (ECTFE), hexafluoropropylene-tetrafluoroethylene copolymer (FEP), tetrafluoroethylene-perfluoroalkyl vinylether copolymer (PFA), other copolymers, various graft polymers, and blends. Among them, ETFE is particularly preferred. As compared with other single polymers such as PTFE, the melting point is low, the forming property is excellent, and mechanical properties such as impact resistance (Izod impact value) and tensile strength are also superior. Incidentally, the melting point (DSC method) of each fluoroplastic is PTFE: 327°C, ETFE: 270°C, the impact strength (ASTM D 256A) is PTFE: 160 J/m, ETFE: not broken, the modulus of flexural elasticity (ASTM D 790) is PTFE: 549 MPa, and ETFE: 1373 MPa. Further, when ETFE is copolymerized with ethylene, a vinyl compound having a functional group can be copolymerized at the same time, and polymer modification mentioned below is easier.

In the aliphatic PA and fluoroplastic, moreover, various characteristic aids and additives can be added. Such examples include reinforcing agent, filler and pigment.

In the resin hose for fuel of the present invention having such composition, one or both of the aliphatic polyamide (aliphatic PA) and the fluoroplastic are modified aliphatic PA and modified fluoroplastic, respectively, and the characteristics of the two satisfy the requirements of difference of melting points (DSC method) of about 60°C or less (preferably about 40°C or less, more preferably about 20°C or less), and difference of moduli of flexural elasticity (ASTM D 790) of about 1500 MPa or less or about 500 MPa or less, and therefore the main body layer 14 and the inner tube layer 16 are directly adhered to each other by co-extrusion. Incidentally, when the fluoroplastic is modified, its crystallinity is disturbed, and the melting point is lowered.

If the difference of melting points is too large, it is hard to co-extrude the main body layer and the inner tube layer, and a sufficient adhesion strength can be hardly maintained between the two, or the layer thickness is likely to disperse when forming. On the other hand, if the difference of moduli of flexural elasticity is too large, it is hard to maintain a sufficient adhesion strength (for example, 30 N/cm or more of peeling adhesion strength conforming to JIS K 6854; same hereinafter) between the main body layer and the inner tube layer at the time of flexural fatigue. To assure the adhesion strength, each reactive functional group in the main body layer and the inner tube layer must be increased, but the essential resin characteristics (flexibility and fuel impermeability) may be disturbed. If a flexibility is particularly required in fuel resin hose, the difference of the moduli of flexural elasticity (ASTM D 790) between the main body layer 14 and the inner tube layer 16 is preferred to be smaller, for example, about 500 MPa or less, preferably about 300 MPa or less, or more preferably about 200 MPa or less.

As the combination of the aliphatic polyamide and the modified fluoroplastic, for example, when the modified fluoroplastic (modified by maleic acid) with 1). melting point: 210°C and 2) modulus of flexural elasticity: 900 MPa is used, nylon 12 (melting point: 175°C, modulus of flexural elasticity: 700 MPa) or nylon 11 (melting point: 180°C, modulus of flexural elasticity: 500 MPa) may be combined. Physical properties of nylon 11 and nylon 12 refer to the value of composition containing plasticizers.

Herein, the modified fluoroplastic is a kind of resin modified in a range not to disturb the original characteristics of the fluoroplastic, by copolymerizing a comonomer (usually vinyl compound) containing functional group or multifunctional comonomer at the time of synthesizing each fluoroplastic (polymer), or by incorporating a functional group capable of reactive-bonding or associating (hydrogen bonding) with a functional group of the modified aliphatic PA in the main chain or the side chain of the polymer by graft coplymerization or substitution reaction of trace amount. The function groups possessed by the modified aliphatic polyamide include amino groups (imino group), mercapto group, methylol group, isocyanate group, carboxyl group, hydroxyl group, halogen group, acid anhydride, aldehyde group, epoxy group. In particular, the amino group (imino group) is preferred. This is because the amino group (imino group) is initially contained in the aliphatic polyamide itself, and it is easy to modify the aliphatic polyamide.

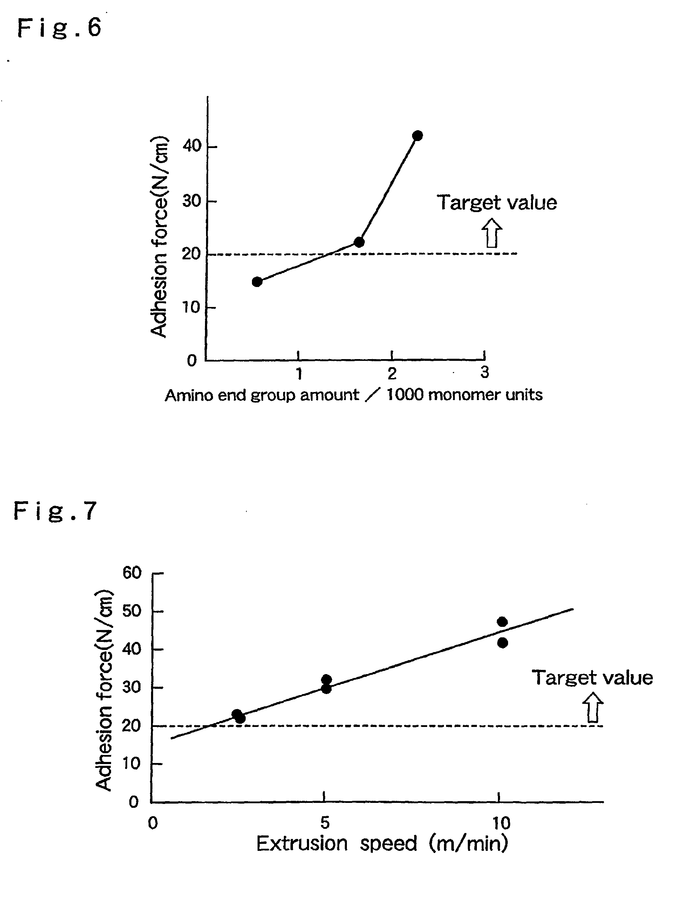

By increase of amino group content, the inventors confirmed that the adhesion force with the fluoroplastic is increased. Its tendency is as shown in Fig. 6.

The functional groups having reactivity with the amino group (imino group) include carbonate groups, halide carboxylate groups, carboxyl group, acid anhydride, epoxy group, hydroxyl group, chloromethyl group, isocyanate group, amino group, and aldehyde group. Among them, from the viewpoint of ease of incorporation of functional group and adequate reactivity with amino group, as the modified fluoroplastic, modified by maleic acids (maleic acid anhydride; acid anhydride) and/or modified epoxy, or a compound incorporating carbonate group and/or halide carboxylate group may be preferably used.

The carbonate group is expressed in the formula -OC (= O) O-, and specifically it is a structure of -OC (= O) O-R group [where R is a hydrogen atom or an organic group (for example, alkyl group with C1 to C20, alkyl group with C2 to C20 having ether bond, etc.), or an element of group I, II, or VII in the periodic table]. Specific examples of carbonate group include -OC (= O) OCH₃, -OC (= O) OC₃H₇, -OC (= O) OC₈H₁₇, -OC (= O) OCH₂CH₂OCH₂, CH₃, etc.

The halide carboxylate group is expressed in the formula - COY [Y is a halogen element], and specific examples include -COF, -COCl, etc.

The modified aliphatic PA is modified by copolymerizing traces of comonomer containing functional group or multifunctional one at the time of polymerization of each aliphatic PA (polymer), or by incorporating a functional group capable of reactive-bonding or associating (hydrogen bonding) with a functional group of the modified fluoroplastic in the main chain or the side chain of the polymer by graft copolymerization or substitution reaction. The functional group is preferred to be incorporated in the terminal of polymer main chain, and the functional group is preferred to be amino groups (imino group) as stated above. The amino groups may be easily increased by ω-lactam or ω-amino acid of a small number of carbon atoms (for example, C6 or less), diamine, triamine, etc.

As the modified aliphatic PA, a functional group shown in other examples of fluoroplastic may be incorporated. For example, by copolymerizing hydroxyl amine, tricarboxylic acid, hydroxyl carboxylic acid, or epichlorohydrine, incorporation of functional group (hydroxyl group, carboxyl group, epoxy group, etc.) may be expected.

Aside from the examples shown above, other combinations are considered to have possibility of bonding of modified aliphatic PA and functional group of modified fluoroplastic. These combinations are shown in Table 1.

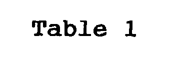

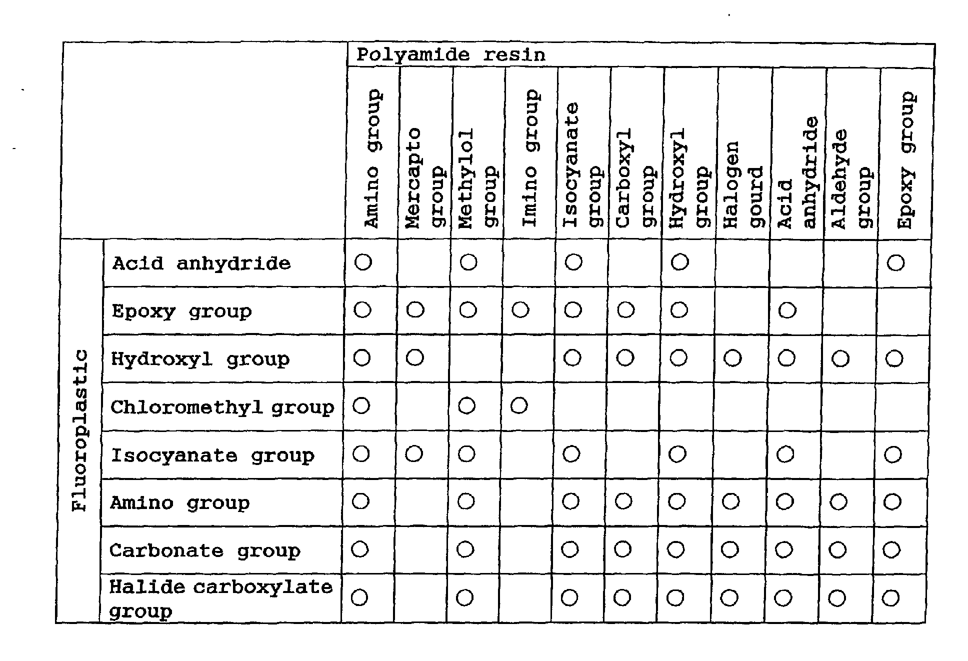

In this fuel resin hose, when manufacturing by co-extrusion of the main body layer 14 and the inner tube layer 16, it is preferred to increase the extrusion speed as much as possible, from the viewpoint of adhesion, in a range not to disturb the extrusion stability (sectional dimension, surface appearance). As in the present invention, since the resin material for forming the main body layer and/or inner tube layer is a functional group incorporated resin, if the residence time in the extrusion head becomes long, it is estimated that the functional group is dissociated to impede the adhesion (see Fig. 7 of the result of the test example describe below).

To assure the adhesion strength, it is enough to increase each reactive functional group in the main body layer and inner tube layer, but the intrinsic resin properties (flexibility, fuel impermeability, etc.) may be impeded.

The specification of the resin hose for fuel is, supposing the overall outside diameter to be 6 to 10 mm in a double structure, main body layer: modified nylon 12, inner tube layer: modified ETFE, overall wall thickness: 0.8 to 1.2 mm, main body layer: 0.6 to 1 mm, and inner tube layer: 0.2 to 0.4 mm. If the inner tube layer is too thin, notable improvement of fuel impermeability is not expected, or if it is too thick, the overall rigidity of the hose (tube) is too high, and the flexibility of the fuel tube is sacrificed.

The resin hose for fuel usually has a conductivity of surface resistivity of 10¹⁰ ohms or less at the inner peripheral wall side 16a of the inner tube layer 16 in order to destaticize the electric charge (discharge the static electricity). This surface resistivity is a value not to cause an electric charge in an object when grounded, and it is generally achieved by a material with the volume resistivity of 10¹⁰ Ω·cm or less.

In a mode of providing with conductivity, a conductive filler may be contained, for example, as the modified fluoroplastic, so that the volume resistivity may be 10¹⁰ Ω·cm or less.

Usable examples of conductive filler include carbon black, graphite, stainless steel, other metal materials of high conductivity such as Au, Ag, Cu, Ni, Pd, and Si, and metal oxides of these metal materials.

In this mode, only in two layers, the resin hose for fuel having destaticizable conductivity in the inner peripheral wall side 16a of the inner tube layer 16 can be obtained, so that the fuel resin hoses can be manufactured at high productivity.

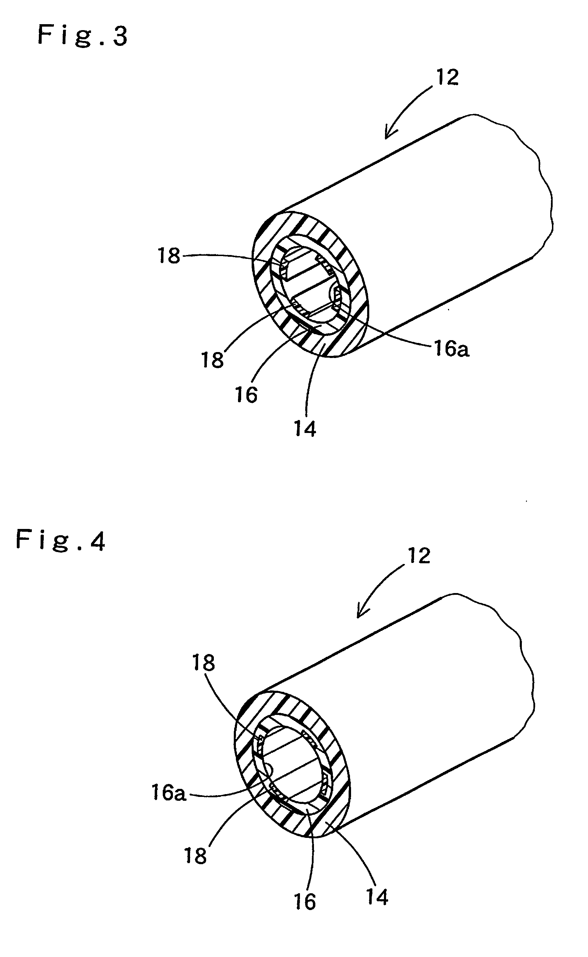

In other mode of providing with conductivity, a conductive path 18 may be formed continuously in the longitudinal direction in contact with the inner wall 16a side of the inner tube layer 16 as shown in Fig. 3, or by burying in the inner wall 16a side of the inner tube layer 16 as shown in Fig. 4. In the illustrated examples, it is formed in stripes from the viewpoint of saving the material, but it may be also formed in a band.

The material for forming the conductive path 18 may be any fluoroplastic that can be co-extruded with the inner tube layer 16 and fused thermally, for example, a material containing the conductive filler on the ETFE when the inner tube layer 16 is formed of modified ETFE. In a different mode, although the productivity is lowered, a conductive paint may be applied by dipping to form at least on the inner wall of the fuel resin hose of double structure.

The material for forming the conductive path 18, if the material being co-extrudable or adherable with the inner tube layer 16, may be a conductive resin having conductivity in the resin itself without containing conductive filler. As the conductive resin, various materials may be used, including straight chain conjugate high polymer, surface conjugate high polymer, electric charge transfer complex type high polymer, radical ion type high polymer, other high polymer containing metal complex, and others. For example, conductive ETFE and conductive nylon may be used.

At this time, the layer thickness of the conductive path 18 is preferred to be as small as possible, as far as the conductivity may be provided, from the viewpoint of saving the materials.

The modulus of flexural elasticity of the conductive path 18 is preferred to be closer to the modulus of flexural elasticity of the inner tube layer 16 rather than the modulus of flexural elasticity of the main body layer 14, from the viewpoint of lessening of the stress applied to the interface of the inner tube layer 16 and the conductive path 18 when bending or force-fitting the fuel hose 12.

The resin hose for fuel of the present invention is a resin hose for fuel composed of plural layers comprising, as mentioned above, a main body layer made of aliphatic polyamide, and an inner tube layer made of fluoroplastic disposed at the inside of the main body layer, in which one or both of the aliphatic polyamide (aliphatic PA) and fluoroplastic are respectively modified aliphatic PA and modified fluoroplastic, and the characteristics of the both satisfy the requirements of difference in melting point (DSC method) of 60°C or less, and difference in modulus of flexural elasticity (ASTM D 790) of 1500 MPa or less or 500 MPa or less, the main body layer and inner tube layer are directly adhered to each other by co-extrusion, and therefore the fuel impermeability is excellent, and it can be manufactured at high productivity.

Further, when the inner tube layer is made of a conductive material, a destaticizable resin hose for fuel can be manufactured without any extra conductive treatment in addition to the forming of the inner tube layer.

### B. An embodiment of connection structure of resin hose for fuel is explained below.

The connection structure of the present invention is a connection structure for force-fitting a resin hose for fuel (resin hose of plural layers) into a metal junction having a fluororubber coat film.

Herein, a metal pipe 24 has hemispherical sectional stopping bumps 22a, 22a in the illustrated example. The material of the metal pipe 24 is optional, including iron, aluminum, copper, or their alloys. In the case of fuel piping, usually, stainless steel (austenitic steel) excellent in corrosion resistance belonging to the category of iron alloy (steel) is used.

The stopping bumps 22a, 22a are formed by cutting of cast or forged pieces in the case of metal joints, but are formed by bulge processing when forming as part of pipe at the leading end of metal piping (fuel piping). At this time, the bulging amount is a maximum diameter of 8.5 to 9.5 mm, for example, when the pipe diameter is 8 mm.

A fluororubber coat film 20 is formed of a solution type paint: a fluororubber polymer (FKM) composition incorporating various additive being dissolved in a solvent, or formed of a latex (emulsion) type paint: an FKM composition being emulsified in water. The solution type is easier to form a uniform coat film (the film thickness can be adjusted easily by adjusting the viscosity by the solvent of immersion and application). Moreover, at the time of subsequent heat treatment, the dispersion medium (solvent) can be evaporated quickly, so that the coat film may be solidified in a short time. In the latex type, the coat film thickness depends on the size of dispersion particles. The coating method, including immersion, spraying, brushing, etc. is optional. It is easier to obtain a uniform film thickness in the immersion coating.

Herein, the FKM is not particularly limited, and includes vinylidene fluoride compound (230°C, -17°C), fluorosilicone compound (185°C, -67°C), tetrafluoroethylene-propylene compound (230°C, -0°C), fluorophosphagen compound (175°C, - 68°C), tetrafluoroethylene-perfluorovinylether compound (250°C, 0°C), and others. Figures in parentheses are heat resistance (temperature of continuous use in air) and cold resistance (TR-10) cited from Table 2-13 (p. 49) of "ABC of New Rubber Technology" edited by Tokai Branch of the Society of Rubber Industry, Japan. As for TR-10, refer to the item of "low temperature elasticity restoration test" of JIS K 6261.

Among them, when applied in a fuel resin hose, the vinylidene fluoride compound is preferred because the balance of heat resistance and cold resistance is excellent as shown in parentheses. The vinylidene fluoride compound is classified into the vinylidene fluoride-hexafluoropropylene binary copolymer type, and vinylidene fluoride-hexafluoropropylene ternary copolymer type, and the latter is superior in heat resistance, oil resistance, and chemical resistance, but is more expensive as compared with the former type (see the cited reference).

The type of the rubber composition for forming the fluororubber coat film 16 is optional, including peroxide vulcanization system, amine vulcanization system, and polyol vulcanization system, but by using the blend containing the vulcanizer having active hydrogen such as amine-polyol vulcanization system, reactive adhesion (chemical bond) with the modified fluoroplastic for forming the inner tube layer 16 mentioned below is expected.

For example, the FKM paint of polyol vulcanization system is prepared by dissolving the composition of the following blending formulation in an organic solvent (methyl ethyl ketone: MEK). The paint viscosity at this time is 70 to 100 cPs (type B viscometer No. 2 rotor 100 rpm).

| Blend formulation of FKM paint | |
|---|---|
| FKM master batch * | 100 parts |
| (vinylidene fluoride-hexafluoropropylene binary system) MT black | 13 parts |
| Magnesium oxide (MgO) | 3 parts |
| Calcium hydroxide (Ca(OH)₂) | 0.1 to 3 parts |

| | |
|---|---|
| * Preliminarily kneaded with polyol vulcanizer and vulcanization aid. | |

At this time, the film thickness (dry) of fluororubber coat film is usually 10 to 100µm, preferably 20 to 50µm. If too thin, the action as the coat film is hardly obtained (mainly the shock absorbing action between the metal junction and the inner tube layer, and gap generation compensation action), and if too thick, further improvement of the coat film action is not expected (action is saturated), and it is hard to force-fit the metal junction into the resin hose.

Between the fluororubber coat film 20 and metal junction 22, usually, it is hard to obtain a sufficient tightness (adhesion) directly. Accordingly, as pretreatment before applying fluororubber paint, it is preferred to coat with a primer. As the primer, a silane coupling agent is used preferably (for example, Chemlock 607 of Lord). The coat film thickness of the primer is preferred to be as thin as possible as far as a sufficient adhesion is maintained between the fluororubber coat film and the metal junction, so that the degree of freedom of film thickness of the fluororubber coat film 20 is increased. The primer coating method is optional, same as in the case of fluororubber coat film, and includes immersion, spraying, brushing, etc.

The fluororubber coat film formed by applying the fluororubber paint may be vulcanized, but in semi-vulcanized state, the metal junction may be force-fitted into the resin hose described below.

Herein, the semi-vulcanized state refers to an non-vulcanized state as much as possible in a range not causing problems in force-fitting work when force-fitting the metal junction into the resin hose or sealing performance after force-fitting. For example, in the vulcanization curve by cure-meter, it should be in a range of T₄₀ to T₇₀, preferably T₅₀ to T₆₀.

In semi-vulcanization state, it is expected to obtain reactive adhesion (chemical bond) with the modified fluoroplastic resin layer in the resin hose of plural layers mentioned below, and when exposed to heating atmosphere intermittently during use, vulcanization is gradually promoted in the time course, and drop of tightening force due to thermal deterioration of resin hose can be compensated, and drop of tightness and sealing performance can be suppressed.

The conditions of heat treatment (semi-vulcanization treatment) is, for example, 30 to 60°C x 90 to 30 min, preferably 40°C x 60 min. If the heating temperature is too high, the progress cannot be stopped in semi-vulcanized state of FKM, and when coated with primer, it is hard to supply heat necessary for primer. If the heating temperature is too low, to the contrary, it takes too much time to reach semi-vulcanized state (the productivity of connection structure is lowered).

The fuel resin hose 12 in the connection structure of the present embodiment is usually, as mentioned above, a plural-layer structure comprising the main body layer 14 made of aliphatic PA or the like, and the inner tube layer 16 made of fluoroplastic disposed inside of the main body layer 14.

The illustrated example shows a two-layer structure of the main body layer 14 and the inner tube layer 16, but it may be also composed of three to six layers comprising a barrier layer, an adhesive layer, a protector layer and other functional layers at the outside of the fuel resin hose 12, or between the main body layer 14 and the inner tube layer 16. Or as shown in Fig. 5, the resin hose for fuel 12A can be enhanced in flexibility by forming bellows B by blow molding after co-extrusion.

Further, in the connection method of this configuration, whether the inner tube layer 16 is treated to have conductivity or not, by force-fitting the metal junction 22 after executing corona discharge process or plasma discharge process on the inner tube layer 16, that is, on the inside of the fuel resin hose 12, it is expected to have an increased adhesion between the fluororubber coat film 26 and the inner tube layer 16.

Herein, the corona discharge process requires a simple apparatus as compared with the plasma discharge process. For example, the corona discharge process is executed as follows.

The end of the plural-layer resin hose is expanded (flared), and is brought closer to the electrodes in reduced pressure atmosphere. The condition at this time is output: 800 W, voltage between electrodes: 12 kV, distance between electrode and hose end: 20 mm, and discharge time: 0.5 to 20 sec.

### [Test examples]

In the resin hose 12 in the specification shown in Fig. 1, outside diameter: 8 mm, thickness: 1 mm (main body layer 0.8 mm, inner tube layer 0.2 mm), the main body layer 14 and inner tube layer 16 were combined in embodiment 1: nylon 12 (1)/modified ETFE (1), embodiment 2: nylon 12 (2)/modified ETFE (2), and comparative example 2: nylon 12 (1)/non-modified ETFE, and co-extruded (extrusion temperature: 280°C (head), extrusion speed: 10 m/min), and resin hoses for fuel 12 of embodiments 1 and 2 and comparative example 2 were prepared.

In the hoses of embodiments 1 and 2, the peeling strength (JIS K 6718) between the main body layer and the inner tube layer was 20 N/cm or more in embodiment 1 and 40 N/cm or more in embodiment 2, and favorable interlayer adhesion was recorded.

By reducing the extrusion speed to 1/2 and 1/4, the adhesion strength between the two layers was measured at two points similarly, and results are shown in Fig. 7. As known from the results, a stable adhesion is obtained at higher extrusion speed.

As comparative example 1, a resin hose of 1 mm in thickness made of nylon 12 only was also prepared.

Modified nylon 12 (1) (amino end groups: 1.64/10000 monomer units, plasticizer: BSBA 5%): Melting point: 175°C, modulus of flexural elasticity: 700 MPa.

Modified nylon 12 (2) (amino end groups: 2.26/10000 monomer units, plasticizer: BSBA 5%): Melting point: 170°C, modulus of flexural elasticity: 400 MPa.

Modified ETFE (modified by maleic acid) (1): Melting point: 210°C, modulus of flexural elasticity: 900 MPa.

Modified ETFE (modified by carbonate) (2): Melting point: 200°C, modulus of flexural elasticity: 1400 MPa.

Non-modified ETFE (3): Melting point: 220°C, modulus of flexural elasticity: 600 MPa.

In these embodiments 1 and 2 and comparative example 1, the fuel permeability was measured by SHED method, and the following results were obtained, and a particularly excellent impermeability of gasohol was recognized.
Gasoline impermeability
   - Embodiment 1: 0.001 g/(m·day)
   - Embodiment 2: 0.001 g/(m·day)
   - Comparative example 1: 0.008 g/(m·day)
Gasohol impermeability (gasoline + ethanol 10 vol.%)
   - Embodiment 1: 0.004 g/(m·day)
   - Embodiment 2: 0.004 g/(m·day)
   - Comparative example 1: 0.139 g/(m·day)

In the metal junction 22 of the outside diameter 6.5 mm and the thickness 0.8 mm (the bulged portion outside diameter 7 mm), the specified fluororubber paint was applied and heated in the condition of 40°C x 60 min, and a semi-vulcanized rubber coat film (film thickness: about 30µm) 20 was formed, and a metal pipe 24 with the rubber coated metal junction 22 was prepared (see Fig. 2).

The metal junction was force-fitted into the resin hose of embodiments 1 and 2 and comparative example 2, and after letting stand at room temperature for 24 hours, the samples were loaded by the air heating test in the condition of 130°C x 96 h, and the proof pressure test was conducted by using the fuel hose proof pressure testing machine (own make) in the conditions of:
pressure elevation pattern: 0.49 MPa gradual steps
ambient temperature: 23°c,
medium: gasoline (automobile gasoline No. 2),
   and the pressure causing leak in the force-fitted portion was measured.

The results were embodiment 1: 6.5 MPa, embodiment 2: 6.5 MPa, and comparative example 2: 2.45 MPa, and embodiments 1 and 2 are known to be substantially enhanced in the sealing performance by far as compared with comparative example 2.

## Claims

1. A resin hose for fuel in a plural-layer structure comprising a main body layer made of aliphatic polyamide, and an inner tube layer made of fluoroplastic disposed at the inner side of the main body layer,
wherein one or both of the aliphatic polyamide (aliphatic PA) and the fluoroplastic are respectively a modified aliphatic PA and a modified fluoroplastic, and the characteristics of the both satisfy the requirements of difference of melting point (DSC method) of 60°C or less, and difference of modulus of flexural elasticity (ASTM D 790) of 1500 MPa or less, and thereby the main body layer and the inner tube layer are directly adhered to each other by co-extrusion.

2. The resin hose for fuel of claim 1, wherein the modified fluoroplastic is modified by incorporating a functional group capable of reactive-bonding or associating with a functional group of the modified aliphatic PA.

3. The resin hose for fuel of claim 2, wherein the modified fluoroplastic is modified by maleic acid and/or modified by epoxy.

4. The resin hose for fuel of claim 2 or 3,
wherein the modified aliphatic PA is modified by incorporating a functional group capable of reactive-bonding or associating with a functional group of the modified fluoroplastic.

5. The resin hose for fuel of claim 4,
wherein the modified aliphatic PA is a material increased in the content of amino group (including imino group).

6. The resin hose for fuel of claim 1, 2, 3, 4, or 5,
wherein the modified aliphatic PA is one of modified nylon 11 and/or modified nylon 12, or mainly made thereof, and the modified fluoroplastic is one of modified ethylene-tetrafluoroethylene copolymer (modified ETFE) or mainly made thereof.

7. A resin hose for fuel in a plural-layer structure comprising a main body layer made of aliphatic polyamide, and an inner tube layer made of fluoroplastic disposed at the inner side of the main body layer,
wherein the aliphatic polyamide (aliphatic PA) is modified nylon 12 of amino group increased type, and the fluoroplastic is carbonate group and/or halide carboxylate group modified type, and
the characteristics of the both satisfy the requirements of a difference of melting point (DSC method) of 60°C or less, and a difference of modulus of flexural elasticity (ASTM D 790) of over 500 MPa to 1500 MPa or less, and thereby the main body layer and the inner tube layer are directly adhered to each other by co-extrusion.

8. A method of manufacturing the resin hose for fuel of claim 7, wherein a speed of the co-extrusion is 5 m/min or more.

9. The resin hose for fuel of claim 1, 2, 3, 4, 5, 6, or 7 wherein the modified aliphatic PA is modified nylon 12, the modified fluoroplastic contains a conductive filler, and the inner peripheral wall side of the inner tube layer has a conductivity of volume resistivity (ASTM D 257) of 10¹⁰Ω·cm or less, or surface resistivity (ASTM D 991) of 10¹⁰Ω or less.

10. The resin hose for fuel of claim 1, 2, 3, 4, 5, 6, or 7 wherein a conductive path is formed continuously in the longitudinal direction in the inner peripheral wall of the inner tube layer, and the inner peripheral wall side of the inner tube layer has a conductivity of volume resistivity of 10¹⁰Ω·cm or less, or surface resistivity of 10¹⁰Ω or less.

11. The resin hose for fuel of claim 10,
wherein the modulus of flexural elasticity of the conductive path is closer to the modulus of flexural elasticity of the inner tube layer, rather than the modulus of flexural elasticity of the main body layer.

12. The resin hose for fuel of claim 1, 2, 3, 4, 5, 6, or 7 wherein the resin hose for fuel has bellows.

13. A connection structure of a resin hose of plural layers for connecting by force-fitting a metal junction having coat film of fluororubber, to the resin hose of plural layers having an inner tube layer made of fluoroplastic, wherein the inner tube layer is formed of a modified fluoroplastic modified by incorporating a polar group.

14. The connection structure of the resin hose of plural layers of claim 13, wherein the inner tube layer is made of a modified fluoroplastic by incorporating one or two or more functional groups containing carbonyl groups selected from the group consisting of carbonate groups and halide carboxylate group.

15. The connection structure of the resin hose of plural layers of claim 14, wherein the fluororubber coat film is formed of a rubber composition of polyol vulcanization system or amine vulcanization system.

16. The connection structure of the resin hose of plural layers of claim 13, 14, or 15, wherein the resin hose of plural layers is a fuel resin hose of which main body layer adjacent to the outside of the inner tube layer is made of an aliphatic polyamide.

17. A connection method of the resin hose of plural layers for connecting by force-fitting a metal junction having coat film of fluororubber, to a resin hose of plural layers having an inner tube layer made of a fluoroplastic,
wherein the inner tube layer is formed of a modified fluoroplastic modified by incorporating a polar group, and the metal junction is force-fitted while the fluororubber coat film is in a semi-vulcanized state.

18. The connection method of the resin hose of plural layers of claim 17, wherein the inner tube layer is made of a modified fluoroplastic by incorporating one or two or more functional groups containing carbonyl groups selected from the group consisting of carbonate group and halide carboxylate groups.

19. The connection method of the resin hose of plural layers of claim 18, wherein the fluororubber coat film is formed of a rubber composition of polyol vulcanization system or amine vulcanization system.

20. The connection method of the resin hose of plural layers of claim 17, 18, or 19, wherein the metal hose is force-fitted after executing a corona discharge process or a plasma discharge process on the inside of the resin hose of plural layers.

21. The connection method of the resin hose of plural layers of claim 20, wherein the resin hose of plural layers is a fuel resin hose of which main body layer adjacent to the outside of the inner tube layer is made of an aliphatic polyamide.

22. The connection method of resin hose of plural layers of claim 17, wherein the resin hose of plural layers is a fuel resin hose of which the main body layer adjacent to the outside of the inner tube layer is made of an aliphatic polyamide.

23. A resin hose for fuel in a plural-layer structure comprising a main body layer made of an aliphatic polyamide, and an inner tube layer made of a fluoroplastic disposed at the inner side of the main body layer,
wherein one or both of the aliphatic polyamide (aliphatic PA) and the fluoroplastic are respectively a modified aliphatic PA and a modified fluoroplastic, and the characteristics of the both satisfy the requirements of a difference of melting point (DSC method) of 60°C or less, and a difference of modulus of flexural elasticity (ASTM D 790) of 500 MPa or less, and thereby the main body layer and the inner tube layer are directly adhered to each other by co-extrusion.
